# EUROPÄISCHE PATENTANMELDUNG

(11) **EP 4 186 357 A1**
(43) Veröffentlichungstag der Anmeldung: **31.05.2023**
(21) Anmeldenummer: 22210212.1
(22) Anmeldetag: 29.11.2022
(51) Int. Cl.: A01G 31/02, A01G 27/00

(54) **VORRICHTUNG ZUR HYDROPONISCHEN KULTIVIERUNG VON PFLANZEN**

(30) Priorität: 29.11.2021 DE 202021106486 U
(71) Anmelder: Kloer, Gregor, 46282 Dorsten (DE); Peveling, Christoph, 46414 Rhede (DE)
(72) Erfinder: KLOER, Gregor, Dorsten 46282 (DE); PEVELING, Christoph, Rhede 46414 (DE)
(74) Vertreter: Gesthuysen Patentanwälte

(57) **Zusammenfassung**

Dargestellt und beschrieben ist eine Vorrichtung zur hydroponischen Kultivierung von Pflanzen (1), mit einem Behälter (2) zur zumindest temporären Aufnahme einer Nährstofflösung (3) und einem Bewässerungssystem (4), das die Pflanzen (1) tröpfchenweise mit der Nährstofflösung (3) versorgt.

Die Vorrichtung zur hydroponischen Kultivierung von Pflanzen (1) ist dadurch einfach aufgebaut und dabei dennoch nachhaltig, dass der Behälter (2) einen Boden (5), Seitenwände (6) und mindestens eine Abdeckung (7) aufweist, wobei im Boden (5) oder in der Nähe des Bodens (5) ein verschließbarer Auslass (8) angeordnet ist und wobei in der Abdeckung (7) mindestens eine Öffnung (9) ausgebildet ist, durch die die Wurzeln (10) einer auf der Abdeckung (7) angeordneten Pflanze (1) in das Innere des Behälters (2) ragen können, und wobei das Bewässerungssystem (4) ein Nährstofflösungsreservoir (11) und ein mit dem Nährstofflösungsreservoir (11) verbundenes Leitungssystem (12) aufweist, wobei das Leitungssystem (12) mindestens eine Tropfdüse (13) aufweist, durch die einer Pflanze (1) tröpfchenweise Nährstofflösung (3) zuführbar ist.

## Beschreibung

Die Erfindung betrifft eine Vorrichtung zur hydroponischen Kultivierung von Pflanzen, mit einem Behälter zur zumindest temporären Aufnahme einer Nährstofflösung und einem Bewässerungssystem, das die Pflanzen tröpfchenweise mit der Nährstofflösung versorgt. Daneben betrifft die Erfindung auch einen Behälter für eine Vorrichtung zur hydroponischen Kultivierung von Pflanzen.

Als Hydroponik wird die Aufzucht und Kultivierung von Zier- und Nutzpflanzen in einem hydroponischen System bezeichnet, in dem sich die Wurzeln einer Pflanze nicht in Erde, sondern in einer Nährlösung befinden, einem Gemisch aus Wasser und darin gelösten Nährstoffen. Die Vorteile von Hydroponik gegenüber konventioneller Landwirtschaft liegen insbesondere in einem geringeren Platzbedarf, einer höheren Wachstumsrate, da sich die Wurzeln frei entfalten können, und einem geringeren Wasserverbrauch, da das Wasser der Pflanze effizienter zugeführt werden kann. In der heutigen modernen Hydroponik haben sich verschiedene Systeme etabliert, die sich insbesondere darin unterscheiden, wie eine Pflanze mit den zur Aufzucht wesentlichen Ressourcen Wasser, Nährstoffe und Sauerstoff versorgt wird.

Bei einfachen Hydroponik-Systemen, die ohne technisches Equipment betrieben werden können, hängen die Wurzeln der Pflanzen dauerhaft in der Nährstofflösung, sodass die Pflanzen stets einen guten Zugang zu Wasser und Nährstoffen haben. Nachteil ist hierbei jedoch, dass es zu Sauerstoffmangel in der Nährstofflösung kommen kann, was zu Algenwachstum und verrotteten Wurzeln führen kann. Daher ist ein solches Hydroponik-System nicht für alle Pflanzen geeignet, insbesondere nicht für tiefwurzelnde Pflanzen.

Die vorliegende Erfindung betrifft daher eine Vorrichtung zur hydroponischen Kultivierung von Pflanzen, die auf einem Hydroponik-System beruht, bei dem die Wurzeln der Pflanzen nicht dauerhaft in die Nährstofflösung ragen. Die Zufuhr der Nährstofflösung erfolgt vielmehr von oben über ein Bewässerungssystem, das die Pflanzen tröpfchenweise mit der Nährstofflösung versorgt.

Eine solche Vorrichtung weist einen Behälter zur zumindest temporären Aufnahme einer Nährstofflösung auf, der einen Boden und Seitenwände hat. In dem Boden ist ein Auslass angeordnet, durch den in dem Behälter angesammelte Nährstofflösung abgelassen werden kann. Die in einem Substrat, beispielsweise Steinwolle, eingebrachte Jungpflanze, kommt in einen Netztopf, der in den zumeist rinnenförmigen Behälter eingesetzt wird. Soll mit einer solchen Vorrichtung eine Vielzahl von Pflanzen aufgezogen werden, so werden entsprechend viele Netztöpfe benötigt, die jeweils am Behälter befestigt werden müssen.

Um auf die Verwendung von Netztöpfen verzichten zu können, wird in den nach oben offenen Behältern in der Praxis häufig eine Substratmatte eingelegt, die mehrere Ausnehmungen aufweisen. In die einzelnen Ausnehmungen werden dann die einzelnen Jungpflanzen bzw. einzelne Substratblöcke mit den Jungpflanzen eingesetzt. Die Bewässerung der Pflanzen erfolgt dabei über Tropfdüsen, die an Leitungen des Bewässerungssystems angebracht sind. Aus diesen Tropfdüsen tropft die Nährstofflösung auf die Jungpflanze bzw. das die Jungpflanze umgebende Substrat. Überschüssige Nährstofflösung tropft dann aus dem Substrat bzw. der Substratmatte in den Behälter, aus dem es zurück in ein Nährstofflösungsreservoir geleitet werden kann. Durch die Abdeckung des Behälters mit entsprechenden Substratmatten kann zwar auf die Verwendung von Netztöpfen verzichtet werden, die einzelnen Substratmatten sind jedoch zumeist nicht mehrfach verwendbar, sodass sie wenig nachhaltig sind, insbesondere dann, wenn sie Torf enthalten.

Der vorliegenden Erfindung liegt daher die Aufgabe zugrunde, eine Vorrichtung zur hydroponischen Kultivierung von Pflanzen zur Verfügung zu stellen, die sowohl für unterschiedliche Pflanzen eingesetzt werden kann, als auch möglichst einfach aufgebaut und dabei dennoch nachhaltig ist. Darüber hinaus soll ein für eine solche Vorrichtung geeigneter Behälter zur Verfügung gestellt werden.

Diese Aufgabe ist bei der erfindungsgemäßen Vorrichtung zur hydroponischen Kultivierung von Pflanzen mit den Merkmalen des Patentanspruchs 1 gelöst. Der Behälter weist neben einem Boden und Seitenwänden mindestens eine Abdeckung auf, in der mindestens eine Öffnung ausgebildet ist. Die einzelnen Jungpflanzen werden dabei derart auf der Abdeckung angeordnet, sodass ihre Wurzeln durch die jeweilige Öffnung in das Innere des Behälters ragen könne. Durch die Verwendung einer Abdeckung mit in der Regel mehreren Öffnungen, deren Abmessung etwas geringer als die entsprechende maximale Abmessung der Jungpflanze bzw. des Substratblocks ist, in dem die Jungpflanze angeordnet ist, kann sowohl auf die Verwendung von Netztöpfen als auch auf die Verwendung von den Behälter abdeckenden Substratmatten verzichtet werden. Die in einem Substratblock, beispielsweise einem Steinwollblock angeordnete Jungpflanze wird dazu einfach im Bereich der Öffnung auf die Abdeckung des Behälters aufgesetzt, sodass die Wurzeln der Pflanze durch die Öffnung in das innere des Behälters wachsen können.

Die Jungpflanze bzw. der Substratblock können dabei entweder nur oberhalb der Öffnung auf die Abdeckung des Behälters aufgesetzt oder auch mit einem Teil in die Öffnung eingesetzt bzw. eingesteckt werden. Hierzu kann die Jungpflanze bzw. der Substratblock in einem Einsatz angeordnet sein bzw. eingesetzt werden, der mit seinem unteren Bereich in der Öffnung positioniert wird, sodass ein Verrutschen der Jungpflanze bzw. des Substratblocks auf der Abdeckung verhindert wird. Der Einsatz kann entweder als von der Abdeckung separates Teil ausgebildet sein, dass dann in die Öffnung eingesetzt wird, oder auch fest mit der Abdeckung verbunden sein. Insbesondere wenn die Abdeckung nicht aus einem Blech, sondern beispielsweise aus Kunststoff besteht, können der Einsatz bzw. in der Regel mehrere Einsätze direkt bei der Herstellung der Abdeckung an der Abdeckung bzw. im Bereich der Öffnungen ausgebildet werden, beispielsweise im Spritzguss. Der Einsatz bildet dann eine Art Mulde oder Kragen, die sich in die Öffnung erstreckt, sodass die Jungpflanze dadurch einfach auf der Abdeckung positioniert werden kann, dass sie in den Einsatz eingesetzt wird.

Zur Versorgung der Pflanzen mit der Nährstofflösung ist, wie eingangs bereits ausgeführt, ein Bewässerungssystem vorgesehen, das ein Nährstofflösungsreservoir und ein mit dem Nährstofflösungsreservoir verbundenes Leitungssystem aufweist. Das Leitungssystem verfügt über mindestens eine Tropfdüse, durch die der entsprechenden Pflanze tröpfchenweise Nährstofflösung zuführbar ist. In der Regel sind an den einzelnen Leitungen bzw. Schläuchen des Leitungssystems eine Mehrzahl von Tropfdüsen angebracht, sodass über das Leitungssystem auch eine entsprechende Mehrzahl an Pflanzen mit der Nährstofflösung versorgt werden kann.

Gemäß einer vorteilhaften Ausgestaltung der erfindungsgemäßen Vorrichtung ist das Nährstofflösungsreservoir auf der einen Seite mit dem Auslass des Behälters und auf der anderen Seite mit dem Leitungssystem verbunden.

Nährstofflösung, die sich im Bereich des Bodens des Behälters angesammelt hat, kann somit zurück in das Nährstofflösungsreservoir gelangen, wodurch der Wasserverbrauch weiter reduziert werden kann. Das Bewässerungssystem weist dazu noch mindestens eine Pumpe auf, mittels der die Nährstofflösung aus dem Nährstofflösungsreservoir in das Leitungssystem gepumpt und somit zu den Pflanzen gefördert wird. Es wird somit ein Kreislauf gebildet, durch den die Nährstofflösung solange wiederverwendet werden kann, solange noch ausreichend Nährstoffe in ihr enthalten sind. Dies kann über entsprechende Messungen kontrolliert werden, sodass bei Bedarf ein Austausch der Nährstofflösung im Nährstofflösungsreservoir vorgenommen werden kann.

Gemäß einer weiteren vorteilhaften Ausgestaltung weist der Auslass des Behälters ein steuerbares Ventil auf. Das Öffnen des Auslasses im Bereich des Bodens des Behälters kann somit automatisch gesteuert werden, beispielsweise in Abhängigkeit von der Witterung, dem Füllstand der Nährstofflösung im Behälter oder der eingesetzten Pflanzen. Dadurch kann auch erreicht werden, dass die Wurzeln der Pflanzen zumindest zeitweise direkt in die Nährstofflösung hineinragen und somit zeitweise mit zusätzlichen Nährstoffen versorgt werden.

Grundsätzlich kann der Behälter eine nahezu beliebige Form aufweisen, die auch auf die jeweiligen Einsatzbedingungen abgestimmt sein kann. In der Regel weist der Behälter jedoch eine Form auf, die der einer Rinne oder eines Troges ähnelt. Insbesondere bei Vorrichtungen im nicht privaten sondern im kommerziellen Einsatz werden dabei in der Regel mehrere Behälter in Längsrichtung hintereinander zu einer entsprechenden Rinne verbunden. Bei einer solchen, aus mehreren Behältern bestehenden Rinne sind die Abdeckungen derart ausgebildet und angeordnet, dass sich Abdeckungen benachbarter Behälter auf zumindest einer Seite überlappen. Durch das Überlappen der Abdeckungen wird gewährleistet, dass kein Licht ins Innere des Behälters bzw. der Rinne gelangt, wodurch Algenwachstum in der Nährstofflösung verhindert wird.

Gemäß einer weiteren besonders bevorzugten Ausgestaltung der Vorrichtung ist im Behälter oberhalb des Bodens ein Zwischenboden angeordnet, der etwas kürzer als der Boden ist. Ein solcher Zwischenboden dient als eine Art Flutboden, sodass die Wurzeln der Pflanzen in Nährstofflösung eintauchen können, die sich auf dem Zwischenboden angesammelt hat. Dadurch, dass der Zwischenboden etwas kürzer als der Boden des Behälters ist, wird darüber hinaus, insbesondere bei der Anordnung von mehreren Behältern in Längsrichtung hintereinander, eine Unterteilung des Behälters bzw. der Rinne in mehrere Abschnitte realisiert, wobei die Abschnitte den einzelnen Zwischenböden entsprechen. Dies hat den Vorteil, dass sich Krankheiten, die bei einer Pflanze auftreten, nicht über die aufgefangene Nährstofflösung auf sämtliche Pflanzen einer Rinne überträgt. Eine mögliche Übertragung auf andere Pflanzen ist dadurch auf einen Abschnitt begrenzt, der der Länge eines Zwischenbodens entspricht.

Die zuvor genannte Aufgabe ist bei dem erfindungsgemäßen Behälter mit den Merkmalen des Patentanspruchs 7 gelöst. Der Behälter weist wiederum einen Boden, Seitenwände und mindestens eine Abdeckung auf, wobei im Boden oder in der Nähe des Bodens ein verschließbarer Auslass und in der Abdeckung mindestens eine Öffnung ausgebildet ist, durch die Wurzeln einer auf der Abdeckung angeordneten Jungpflanze in das Innere des Behälters ragen können. Damit die Nährstofflösung, die sich im Bereich des Bodens des Behälters ansammelt, aus dem Behälter abgelassen werden kann, ist im Bereich des Bodens oder im Boden ein verschließbarer Auslass angeordnet.

Gemäß einer vorteilhaften Ausgestaltung des erfindungsgemäßen Behälters ist die Abdeckung senkrecht zu ihrer Längsachse gewölbt ausgebildet, wodurch die Abdeckung eine höhere Steifigkeit erhält. Vorzugsweise ist die Abdeckung dabei nach innen gewölbt, sodass sich auch auf der Oberseite der Abdeckung Nährstofflösung für die darauf angeordnete Jungpflanze bzw. den die Jungpflanze aufnehmenden Substratblock ansammeln kann.

Damit kein Licht in das Innere des Behälters gelangt, weist die Abdeckung vorzugsweise an ihren einander gegenüberliegenden Längsseiten jeweils einen abgebogenen Rand auf, der das freie Ende der Seitenwände überragt. Gleichzeitig wird durch die beiden abgebogenen Ränder ein seitliches Verrutschen der Abdeckung verhindert. Zusätzlich kann die Abdeckung auch an einer Stirnseite einen in Richtung des Bodens abgebogenen Rand aufweisen. Wird nur ein einzelner Behälter verwendet, so weist vorzugsweise auch die zweite Stirnseite einen entsprechenden abgebogenen Rand auf. Sind dagegen mehrere Behälter in Längsrichtung hintereinander zu einer Rinne verbunden, so weisen die Abdeckungen der einzelnen Behälter jeweils nur an einer Stirnseite einen abgebogenen Rand auf, während an der anderen Stirnseite kein abgebogener Rand ausgebildet ist, sodass benachbart zueinander angeordnete Abdeckungen einander überlappend angeordnet werden können.

Zuvor ist ausgeführt worden, dass die einzelnen Jungpflanzen in der Regel in einem Substratblock, insbesondere einem Steinwollblock angeordnet sind, der so auf der Abdeckung des Behälters positioniert wird, dass die Wurzeln der Jungpflanze durch eine Öffnung in der Abdeckung in das Innere des Behälters wachsen können. Bei Jungpflanzen, die nicht in einem derartigen Substrat gezüchtet werden, ist in den Öffnungen in der Abdeckung jeweils eine vorzugsweise rohrförmige Halterung für die einzelnen Jungpflanzen angeordnet. In diese Halterung kann dann der Wurzelkörper der Pflanze eingesetzt werden. Eine solche vorzugsweise rohrförmige Halterung eignet sich beispielsweise besonders gut zur Aufnahme von Erdbeerjungpflanzen.

Die Anordnung bzw. die Befestigung der Halterung in der Öffnung der Abdeckung erfolgt vorzugsweise über eine lösbare mechanische Verbindung, insbesondere eine Steckverbindung oder einen Bajonett-Verschluss. Dadurch lässt sich die Halterung für die Jungpflanze sowohl einfach in der Öffnung fixieren als auch wieder aus der Öffnung entnehmen, wenn die Pflanze aus dem Behälter entnommen werden soll.

Im Einzelnen gibt es eine Vielzahl von Möglichkeiten, die erfindungsgemäße Vorrichtung bzw. den Behälter auszugestalten und weiterzubilden. Dazu wird verwiesen sowohl auf die den Patentansprüchen 1 und 7 nachgeordneten Patentansprüche als auch auf die nachfolgende Beschreibung von Ausführungsbeispielen in Verbindung mit der Zeichnung. In der Zeichnung zeigen
- Fig. 1: eine Prinzipskizze einer erfindungsgemäßen Vorrichtung zur hydroponischen Kultivierung von Pflanzen,
- Fig. 2: ein erstes Ausführungsbeispiel eines erfindungsgemäßen Behälters,
- Fig. 3: eine perspektive Darstellung der Abdeckung des Behälters gemäß Fig. 2,
- Fig. 4: die Abdeckung gemäß Fig. 3, von vorne, und
- Fig. 5: ein zweites Ausführungsbeispiel eines erfindungsgemäßen Behälters.

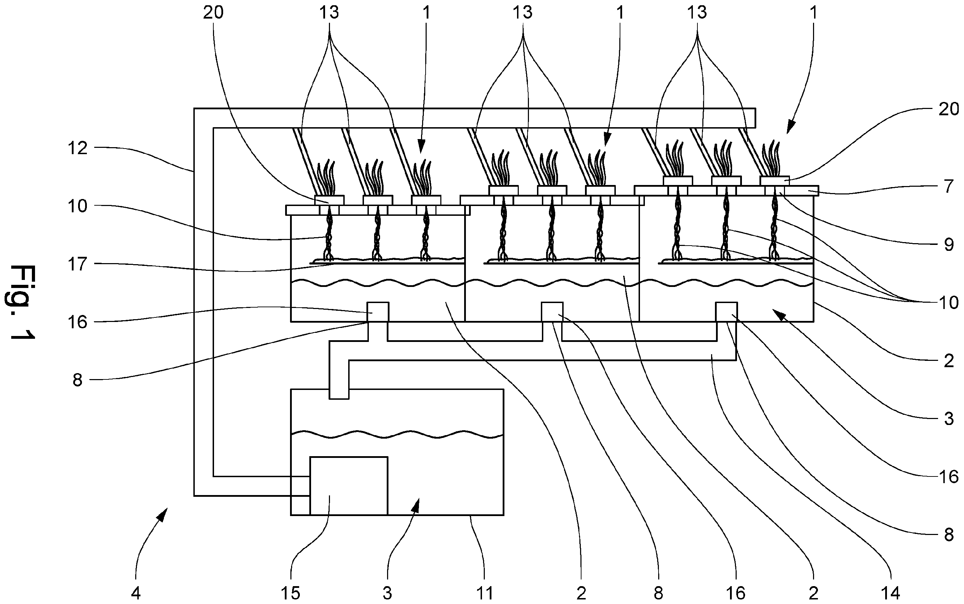

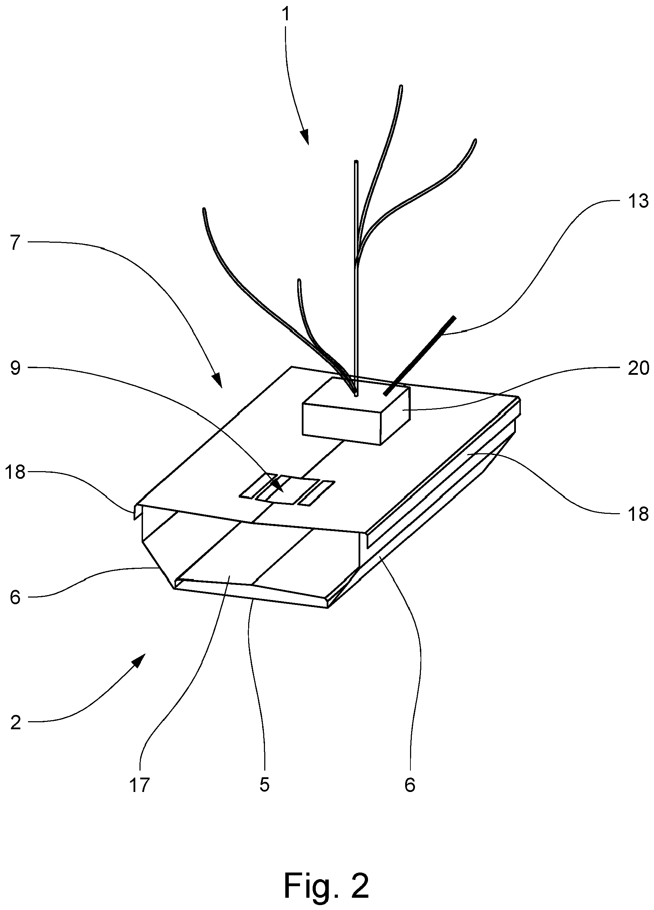

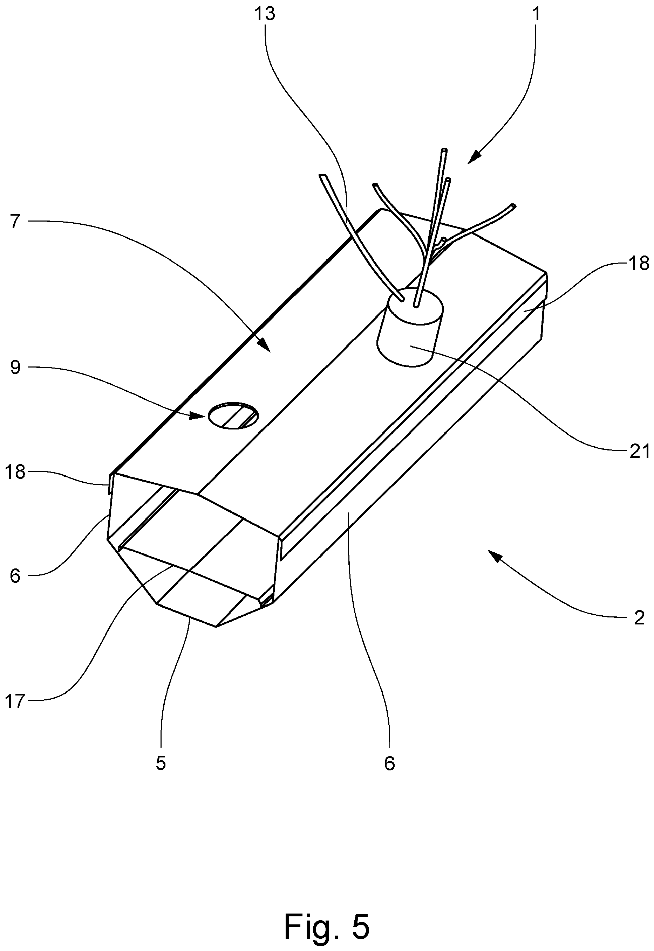

Fig. 1 zeigt eine Prinzipskizze einer erfindungsgemäßen Vorrichtung zur hydroponischen Kultivierung von Pflanzen 1 mit einem Behälter 2 zur zumindest temporären Aufnahme einer Nährstofflösung 3 und einem Bewässerungssystem 4, das die Pflanzen 1 tröpfchenweise mit der Nährstofflösung 3 versorgt. Die Figuren 2 und 5 zeigen jeweils ein Ausführungsbeispiel eines Behälters 2, der in der Vorrichtung gemäß Fig. 1 eingesetzt werden kann.

Die in Fig. 1 skizzierte Vorrichtung weist drei in Längsrichtung hintereinander angeordnete Behälter 2 auf, die zusammen eine längliche Rinne bilden. Die Anzahl der hintereinander angeordneten Behälter 2 ist dabei keineswegs auf die nur beispielhaft gezeigte Anzahl beschränkt. In der Praxis wird vielmehr in der gewerblichen Nutzung in der Regel eine deutlich größere Anzahl an entsprechenden Behältern 2 hintereinander angeordnet, sodass Rinnen mit einer Länge von 100 m oder auch 200 m oder mehr entstehen können, wobei die einzelnen Behälter 2 selber nur eine Länge von beispielsweise 1 - 2 m aufweisen.

Die einzelnen Behälter 2 weisen jeweils einen Boden 5, Seitenwände 6 und eine Abdeckung 7 auf. Sind die Behälter 2 Teil einer aus mehreren Behältern bestehenden Rinne, so weist nur der vorderste und der hinterste Behälter 2 an einer Stirnseite auch eine Wand auf, sodass insgesamt eine durchgehende Rinne gebildet wird, die nur an ihren beiden Stirnseiten geschlossen ist. Wird ein Behälter 2 dagegen alleine eingesetzt, so weist dieser an seinen beiden gegenüberliegenden Stirnseiten jeweils eine Wand auf, sodass dann der einzelne Behälter 2 sowohl an den Längsseiten als auch an den Stirnseiten geschlossen ist.

Um im Behälter 2 angesammelte Nährstofflösung 3 bedarfsweise abzulassen oder sicherzustellen, dass die angesammelte Nährstofflösung 3 einen bestimmten Pegel nicht übersteigt, ist im Boden 5 ein verschließbarer Auslass 8 angeordnet. Der Auslass 8 muss dabei nicht zwingend im Boden 5 angeordnet sein, so wie dies in Fig. 1 dargestellt ist, sondern kann auch in einer der Seitenwände 6 ausgebildet sein, wobei der Auslass 8 dann jedoch im unteren Bereich der Seitenwand 6 und somit in der Nähe des Bodens 5 angeordnet sein soll. Die einzelnen Auslässe 8 in den Behältern 2 weisen jeweils ein steuerbares Ventil 16 auf, sodass die Auslässe 8 bedarfsgerecht geöffnet oder geschlossen werden können.

Außerdem sind in der Abdeckung 7 mehrere Öffnungen 9 ausgebildet, durch die die Wurzel 10 der auf der Abdeckung 7 angeordneten Pflanzen 1 in das Innere des Behälters 2 ragen können. Die Abdeckung 7 dient somit zur Aufnahme der Pflanzen 1, wobei sie gleichzeitig gewährleistet, dass kein Licht in das Innere des Behälters 2 fällt, sodass es nicht zu Algenbildung in der Nährstofflösung 3 kommt. Durch die in der Abdeckung 7 ausgebildeten Öffnungen 9 wird dabei dennoch gewährleistet, dass sich die Wurzeln 10 der Pflanzen 1 ungehindert ins Innere des Behälters 2 ausbreiten können.

Die in Fig. 1 skizzierte Vorrichtung weist neben mehreren Behältern 2 noch ein Bewässerungssystem 4 auf, das insbesondere aus einem Nährstofflösungsreservoir 11 und einem Leitungssystem 12 besteht. Das Leitungssystem 12 ist dabei auf der einen Seite mit dem Nährstofflösungsreservoir 11 verbunden und weist auf der anderen Seite mehrere Tropfdüsen 13 auf, durch die den einzelnen Pflanzen 1 tröpfchenweise Nährstofflösung 3 zugeführt werden kann. Das Nährstofflösungsreservoir 11 ist über eine Leitung 14 mit den einzelnen Auslässen 8 der Behälter 2 verbunden, sodass die in den Behältern 2 angesammelte Nährstofflösung 3 zurück in das Nährstofflösungsreservoir 11 gelangen kann. Außerdem ist in dem Nährstofflösungsreservoir 11 eine Pumpe 15 angeordnet, durch die die Nährstofflösung 3 über das Leistungssystem 12 und die darin ausgebildeten Tropfdüsen 13 aus dem Nährstofflösungsreservoir 11 zu den einzelnen Pflanzen 1 gelangt.

Bei den in den Figuren 2 und 5 dargestellten beiden Ausführungsbeispielen eines erfindungsgemäßen Behälters 2 ist oberhalb des Bodens 5 jeweils ein Zwischenboden 17 angeordnet, der etwas kürzer als der Boden 2 ist. Ein solcher Zwischenboden 17 dient zum einen als Flutboden, sodass die Wurzeln 10 der Pflanzen 1 in die Nährstofflösung 3 eintauchen können, die sich auf dem Zwischenboden 17 angesammelt hat, zum anderen als Abtrennung zwischen einzelnen Behältern 2 einer Vorrichtung. Dadurch, dass der Zwischenboden 17 kürzer als der Boden 5 des Behälters 2 ist, wird verhindert, dass sich Krankheiten, die bei einer Pflanze 1 auftreten, über die aufgefangene Nährstofflösung 3 auf sämtliche Pflanzen 1 einer Rinne übertragen. Die verunreinigte Nährstofflösung 3 bleibt auf den Bereich eines Zwischenboden 17 beschränkt. Nährstofflösung 3, die vom Zwischenboden 17 auf den darunter befindlichen Boden 5 des Behälters 2 gelangt, muss dann aus dem Bewässerungssystem 4 entfernt und durch neue, saubere Nährstofflösung 3 ersetzt werden.

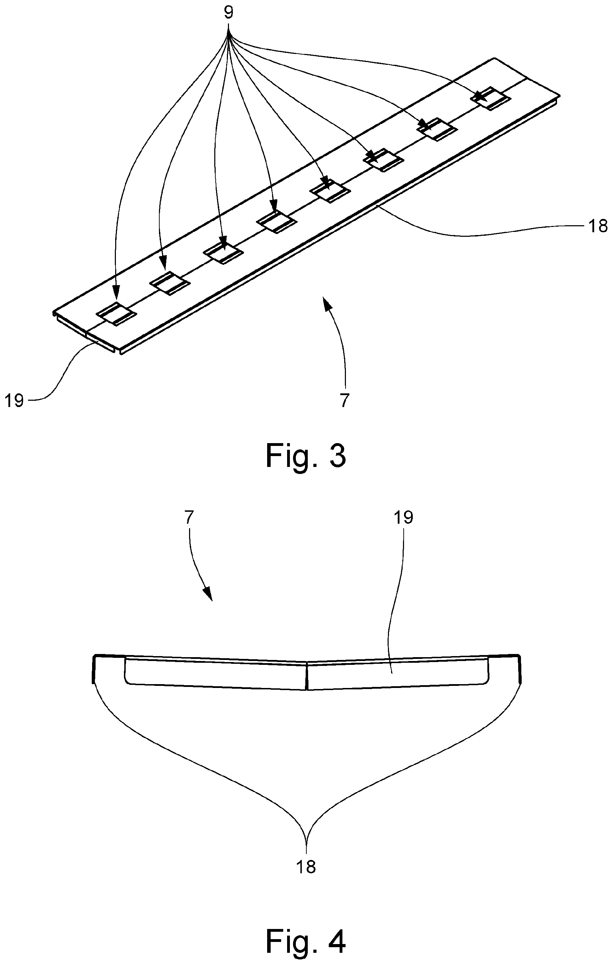

Aus der Darstellung der Abdeckung 7 gemäß den Figuren 3 und 4 ist ersichtlich, dass die Abdeckung 7 senkrecht zu ihrer Längsrichtung L nach innen gewölbt ist. Wie aus Figur 4 ersichtlich ist, befindet sich dabei der tiefste Punkt der Abdeckung 7 in der Mitte der Abdeckung 7, sodass die Abdeckung 7 von den beiden äußeren Längsrändern zur Mitte hin um einige Grad geneigt ist. Dies führt dazu, dass sich überschüssige Nährstofflösungen 3, die nicht direkt von der Pflanze 1 aufgenommen wird, im Bereich der Mittelebene der Abdeckung 7 ansammelt und somit auf diesem Wege der Pflanze 1 wieder zugeführt werden kann.

Außerdem ist aus den Figuren 3 und 4 ersichtlich, dass die Abdeckung 7 an ihren aneinander gegenüberliegenden Längsseiten jeweils einen abgebogenen Rand 18 aufweist, der in Richtung des Bodens 5 des Behälters 2 abgebogen ist, sodass die beiden Ränder 18 jeweils das freie Ende einer Seitenwand 6 des Behälters 2 überragen. Außerdem ist auch an einer Stirnseite der Abdeckung 7 ein entsprechend abgebogener Rand 19 ausgebildet. Sowohl die Wölbung der Abdeckung 7 als auch die abgebogenen Ränder 18, 19 führen darüber hinaus zu einer Erhöhung der Stabilität der Abdeckung 7, die vorzugsweise - ebenso wie der Rest des Behälters 2 - aus einem Blech hergestellt ist.

Bei dem in Figur 2 dargestellten Behälter 2 befindet sich die Pflanze 1 mit ihren Wurzeln 10 in einem Substrat 20, bei dem es sich insbesondere um einen Steinwollblock handeln kann, wenn die Pflanze 1 auf die Abdeckung 7 des Behälters 2 aufgesetzt wird. Die Abmessungen des Substrats 20 sind dabei etwas größer als die Abmessungen der Öffnung 9 in der Abdeckung 7, auf die das Substrat 20 aufgesetzt wird. Dadurch wird die Öffnung 9 durch das Substrat 20 abgedeckt, sodass kein Licht durch die Öffnung 9 in das Innere des Behälters 2 gelangt, während die Wurzeln 10 der Pflanze 1 durch die Öffnung 9 in das Innere des Behälters 2 wachsen können. Ein in Figur 2 dargestelltes Substrat 20 eignet sich beispielsweise für die Aufzucht von Gurken, Tomaten, Paprika oder Auberginen. Das Substrat 20 mit der Pflanze 1 kann entweder direkt auf die Abdeckung 7 aufgesetzt werden, wie dies in der Figur dargestellt ist, oder die Pflanze 1 kann mit dem Substrat 20 in einem passenden Pflanzenbehälter angeordnet sein, der dann auf die Abdeckung aufgesetzt wird.

Figur 5 zeigt dagegen ein Behälter 2, der für Pflanzen 1 eingesetzt wird, die nicht zunächst in einem Substrat aus den entsprechenden Samen aufgezogen worden sind. Hierbei kann es sich beispielsweise um Erdbeeren handeln. Damit auch derartige Pflanzen 1 einfach auf der Abdeckung 7 des Behälters 2 positioniert werden können, sind in den Öffnungen 9 in der Abdeckung 7 rohrförmige Halterungen 21 angeordnet. In diese Halterungen 21 können die Jungpflanzen 1 mit ihren Wurzelballen einfach eingesetzt werden. Zur Fixierung der Halterungen 21 an der Abdeckung 7 ist zwischen der Halterung 21 und der Öffnung 9 eine lösbare mechanische Verbindung vorgesehen, die beispielsweise nach Art eines Bajonett-Verschlusses ausgebildet sein kann.

Die erfindungsgemäße Vorrichtung bzw. der erfindungsgemäße Behälter 2 eignet sich zur einfachen und effektiven Aufzucht von unterschiedlichen Pflanzen 1 in einer entsprechenden Nährstofflösung 3, deren Zusammensetzung an die jeweiligen Pflanzen 1 angepasst ist. Die Pflanzen 1 werden dazu einfach im Bereich der Öffnungen 9 auf die Abdeckung 7 des Behälters 2 aufgesetzt, sodass die Wurzeln 10 der Pflanze 1 in das Innere des Behälters 2 wachsen können. Auf die Verwendung von Substratmatten kann dabei ebenso verzichtet werden wie auf die Verwendung von Netztöpfen.

Da die Zufuhr der Nährstofflösung 3 über Tropfdüsen 13 erfolgt, die mit ihrem Ende entweder etwas oberhalb der Pflanze 1 angeordnet oder in das die Pflanze 1 umgebende Substrat 20 eingestochen sein können, ist auch eine ausreichende Sauerstoffzufuhr gewährleistet. Die Übertragung von Krankheiten zwischen einzelnen Pflanzen 1 kann dadurch auf einzelne Bereiche beschränkt werden, dass im Behälter 2 ein Zwischenboden 17 angeordnet ist, der eine geringere Länge als der Behälter 2 bzw. dessen Boden 5 aufweist. Durch Krankheiten verunreinigte Nährstofflösung 3 gelangt dadurch nur an die Wurzeln 10 der Pflanzen 1, die oberhalb eines gemeinsamen Zwischenbodens 17 angeordnet sind.

### Bezugszeichen

- 1.: Pflanze
- 2.: Behälter
- 3.: Nährstofflösung
- 4.: Bewässerungssystem
- 5.: Boden
- 6.: Seitenwände
- 7.: Abdeckung
- 8.: Auslass
- 9.: Öffnung
- 10.: Wurzeln
- 11.: Nährstofflösungsreservoir
- 12.: Leitungssystem
- 13.: Tropfdüse
- 14.: Leitung
- 15.: Pumpe
- 16.: Ventil
- 17.: Zwischenboden
- 18.: abgebogener Rand (Längsseiten)
- 19.: abgebogener Rand (Stirnseite)
- 20.: Substrat
- 21.: Halterung

## Patentansprüche

1. Vorrichtung zur hydroponischen Kultivierung von Pflanzen (1), mit einem Behälter (2) zur zumindest temporären Aufnahme einer Nährstofflösung (3) und einem Bewässerungssystem (4), das die Pflanzen (1) tröpfchenweise mit der Nährstofflösung (3) versorgt,
wobei der Behälter (2) einen Boden (5), Seitenwände (6) und mindestens eine Abdeckung (7) aufweist, wobei im Boden (5) oder in der Nähe des Bodens (5) ein verschließbarer Auslass (8) angeordnet ist und wobei in der Abdeckung (7) mindestens eine Öffnung (9) ausgebildet ist, durch die die Wurzeln (10) einer auf der Abdeckung (7) angeordneten Pflanze (1) in das Innere des Behälters (2) ragen können, und
wobei das Bewässerungssystem (4) ein Nährstofflösungsreservoir (11) und ein mit dem Nährstofflösungsreservoir (11) verbundenes Leitungssystem (12) aufweist, wobei das Leitungssystem (12) mindestens eine Tropfdüse (13) aufweist, durch die einer Pflanze (1) tröpfchenweise Nährstofflösung (3) zuführbar ist.

2. Vorrichtung nach Anspruch 1, **dadurch gekennzeichnet, dass** das Nährstofflösungsreservoir (11) auf der einen Seite mit dem Auslass (8) des Behälters (2) und auf der anderen Seite mit dem Leitungssystem (12) verbunden ist und dass das Bewässerungssystem (4) eine Pumpe (15) aufweist, durch die Nährstofflösung (3) aus dem Nährstofflösungsreservoir (11) durch das Leitungssystem (12) zu den Jungpflanzen (3) gefördert werden kann.

3. Vorrichtung nach Anspruch 1 oder 2, **dadurch gekennzeichnet, dass** der Auslass (8) des Behälters (2) ein steuerbares Ventil (16) aufweist.

4. Vorrichtung nach einem der Ansprüche 1 bis 3, **dadurch gekennzeichnet, dass** die Abdeckung (7) senkrecht zu ihrer Längsrichtung gewölbt ist, vorzugsweise nach innen gewölbt ist.

5. Vorrichtung nach einem der Ansprüche 1 bis 5, **dadurch gekennzeichnet, dass** mehrere Behälter (2) in Längsrichtung hintereinander zu einer Rinne verbunden sind, wobei die Abdeckungen (7) derart ausgebildet und angeordnet sind, dass sich Abdeckungen (7) benachbarter Behälter (2) auf einer Seite überlappen.

6. Vorrichtung (1) nach Anspruch 5, **dadurch gekennzeichnet, dass** zumindest ein Teil der Behälter (2) jeweils einen Zwischenboden (17) aufweist, der oberhalb des Bodens (5) angeordnet und etwas kürzer als der Boden (2) ist.

7. Behälter (2) für eine Vorrichtung zur hydroponischen Kultivierung von Pflanzen (1), insbesondere nach einem der Ansprüche 1 bis 6, wobei der Behälter (2) einen Boden (5), Seitenwände (6) und mindestens eine Abdeckung (7) aufweist, wobei im Boden (5) oder in der Nähe des Bodens (5) ein verschließbarer Auslass (8) angeordnet ist und wobei in der Abdeckung (7) mindestens eine Öffnung (9) ausgebildet ist, durch die die Wurzeln (10) einer auf der Abdeckung (7) angeordneten Pflanze (1) in das Innere des Behälters (2) ragen können.

8. Behälter (2) nach Anspruch 7, **dadurch gekennzeichnet, dass** die Abdeckung (7) senkrecht zu ihrer Längsrichtung gewölbt ist, vorzugsweise nach innen gewölbt ist.

9. Behälter (2) nach Anspruch 7 oder 8, **dadurch gekennzeichnet, dass** die Abdeckung (7) an ihren einander gegenüberliegenden Längsseiten jeweils einen abgebogenen Rand (18) aufweist, der das freie Ende der Seitenwände (6) überragt.

10. Behälter (2) nach einem der Ansprüche 7 bis 9, **dadurch gekennzeichnet, dass** die Abdeckung (7) an einer Stirnseite einen in Richtung des Bodens (5) abgebogenen Rand (19) aufweist.

11. Behälter (2) nach einem der Ansprüche 7 bis 10, **dadurch gekennzeichnet, dass** oberhalb des Bodens (5) ein Zwischenboden (17) angeordnet ist, der etwas kürzer als der Boden (5) ist.

12. Behälter (2) nach einem der Ansprüche 7 bis 11, **dadurch gekennzeichnet, dass** in der mindestens einen Öffnung (9) in der Abdeckung (7) eine vorzugsweise rohrförmige Halterung (21) für eine Pflanze (1) angeordnet ist.

13. Behälter (2) nach Anspruch 12, **dadurch gekennzeichnet, dass** zwischen der Öffnung (9) in der Abdeckung (7) und der Halterung (21) für eine Pflanze (1) eine lösbare mechanische Verbindung ausgebildet ist, insbesondere eine Steckverbindung oder ein Bajonett-Verschluss.
